(19) 

**Europäisches Patentamt**
**European Patent Office**
**Office européen des brevets**

(11) **EP 4 660 892 A1**

(12) **EUROPEAN PATENT APPLICATION**
published in accordance with Art. 153(4) EPC

(43) Date of publication:
**10.12.2025 Bulletin 2025/50**

(21) Application number: **24750329.5**

(22) Date of filing: **31.01.2024**

(51) International Patent Classification (IPC):
*G06N 3/0985* (2023.01)   *G06N 3/086* (2023.01)

(52) Cooperative Patent Classification (CPC):
**G06N 3/086; G06N 3/0985**

(86) International application number:
**PCT/JP2024/003019**

(87) International publication number:
**WO 2024/162380 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.02.2023 JP 2023014970**

(71) Applicant: **Inter-University Research Institute
Corporation
Research Organization of Information and
Systems
Tachikawa-shi,
Tokyo 190-0014 (JP)**

(72) Inventors:
• **ISHIKAWA, Fuyuki
  Tokyo 101-8430 (JP)**
• **CALSI, Davide Li
  Tokyo 101-8430 (JP)**
• **DURAN, Matias Federico
  Tokyo 101-8430 (JP)**
• **ZHANG, Xiao Yi
  Tokyo 101-8430 (JP)**
• **ARCAINI, Paolo
  Tokyo 101-8430 (JP)**

(74) Representative: **Richardt Patentanwälte PartG
mbB
Wilhelmstraße 7
65185 Wiesbaden (DE)**

(54) **MODEL GENERATION DEVICE, MACHINE LEARNING SYSTEM, MODEL GENERATION METHOD, AND PROGRAM**

(57)   A model generation apparatus includes a parameter identification unit that identifies a parameter affecting misclassification of misclassification data incorrectly classified by a trained classification model, among parameters of the classification model for each type of the misclassification, based on the misclassification data incorrectly classified by the trained classification model; a parameter correction unit that generates a correction parameter obtained by correcting the parameter identified by the parameter identification unit for each type of the misclassification; and a parameter integration unit that generates an integrated model including an integrated parameter obtained by integrating the correction parameters for each type of the misclassification.

**EP 4 660 892 A1**

# FIG.4

```
         ┌─────────────────────────────────┐
         │     START GENERATION PROCESS    │
         └─────────────────────────────────┘
                          │
                          ▼                    ⌇S1
         ┌─────────────────────────────────┐
         │     TRAIN CLASSIFICATION MODEL  │
         └─────────────────────────────────┘
                          │
                          ▼                    ⌇S2
         ┌─────────────────────────────────┐
         │     CLASSIFY BY TRAINED MODEL   │
         └─────────────────────────────────┘
                          │
                          ▼
        ╱──────────────────────────────────╲
        │      TYPE OF MISCLASSIFICATION    │
        ╲──────────────────────────────────╱
                          │
                          ▼                    ⌇S3
         ┌─────────────────────────────────┐
         │   EXTRACT MISCLASSIFICATION DATA│
         └─────────────────────────────────┘
                          │
                          ▼                    ⌇S4
         ┌─────────────────────────────────┐
         │        IDENTIFY PARAMETER       │
         └─────────────────────────────────┘
                          │
                          ▼                    ⌇S5
         ┌─────────────────────────────────┐
         │        CORRECT PARAMETER        │
         └─────────────────────────────────┘
                          │
                          ▼
        ╱──────────────────────────────────╲
        │      TYPE OF MISCLASSIFICATION    │
        ╲──────────────────────────────────╱
                          │
                          ▼                    ⌇S6
         ┌─────────────────────────────────┐
         │  INTEGRATE CORRECTION PARAMETERS│
         └─────────────────────────────────┘
                          │
                          ▼                    ⌇S7
         ┌─────────────────────────────────┐
         │    GENERATE INTEGRATED MODEL    │
         └─────────────────────────────────┘
                          │
                          ▼
         ┌─────────────────────────────────┐
         │      END GENERATION PROCESS     │
         └─────────────────────────────────┘
```

**Description**

TECHNICAL FIELD

The present invention relates to a model generation apparatus, a machine learning system, a model generation method, and a program.

BACKGROUND ART

Conventionally, deep neural networks (DNN) based on deep training have been used in technical fields such as image classification, natural language processing and decision making. In recent years, the application of deep neural networks to safety-sensitive technical fields such as autonomous driving technology or medical diagnosis technology has been progressing.

In technical fields where safety is required, prediction errors of deep neural networks may cause serious consequences. To reduce prediction errors, a technique for correcting trained deep neural networks has been proposed. For example, Non-Patent Document 1 discloses a technique for detecting parameters affecting misclassification by a defect localization technique and correcting the parameters so as to reduce misclassification while maintaining correct classification.

CITATION LIST

NON-PATENT DOCUMENT

Non-Patent Document 1: J. Sohn, S. Kang, and S. Yoo, "Search based repair of deep neural networks", CoRR, abs/1912.12463, 2019.

SUMMARY OF INVENTION

TECHNICAL PROBLEM

However, in the conventional technology, there is a problem that parameters cannot be corrected in consideration of the risk level of misclassification. For example, the severity and frequency of accidents caused by misclassification are not uniform. If parameters can be corrected appropriately according to the risk level of misclassification, safety can be improved.

In view of the above technical problems, an object of an embodiment of the present invention is to appropriately correct a trained model for multiple types of misclassification.

SOLUTION TO PROBLEM

In order to solve the above problem, a model generation apparatus according to one aspect of the present invention includes a parameter identification unit configured to identify a parameter affecting misclassification of misclassification data incorrectly classified by a trained classification model, among parameters of the classification model for each type of the misclassification, based on the misclassification data incorrectly classified by the trained classification model; a parameter correction unit configured to generate a correction parameter obtained by correcting the parameter identified by the parameter identification unit for each type of the misclassification; and a parameter integration unit configured to generate an integrated model including an integrated parameter obtained by integrating the correction parameters for each type of the misclassification.

ADVANTAGEOUS EFFECTS OF THE INVENTION

According to one aspect of the present invention, a trained model can be appropriately corrected for a plurality of types of misclassification.

BRIEF DESCRIPTION OF THE DRAWINGS

[FIG. 1] FIG. 1 is a block diagram illustrating an example of the overall configuration of a machine learning system.

[FIG. 2] FIG. 2 is a block diagram illustrating an example of the hardware configuration of a computer.

[FIG. 3] FIG. 3 is a block diagram illustrating an example of the functional configuration of a machine learning system.

[FIG. 4] FIG. 4 is a flowchart illustrating an example of a generation process.

[FIG. 5] FIG. 5 is a flowchart illustrating an example of classification process.

[FIG. 6A] FIG. 6A is a diagram illustrating an example of validation results for VGG16.

[FIG. 6B] FIG. 6B is a diagram illustrating an example of validation results for ENetB7.

[FIG. 7] FIG. 7 is a block diagram illustrating another example of the overall configuration of a machine learning system.

[FIG. 8] FIG. 8 is a block diagram illustrating another example of the functional configuration of a machine learning system.

[FIG. 9] FIG. 9 is a flowchart illustrating another example of the generation process.

DESCRIPTION OF EMBODIMENTS

Each embodiment of the present invention will be described below with reference to the attached drawings. In the present specification and the drawings, components having substantially the same functional configuration will be denoted by the same reference numerals and thus duplicate descriptions will be omitted.

[First embodiment]

The first embodiment of the present invention is a machine learning system that trains a classification model based on training data to which a ground truth label is assigned, and classifies the data by using the trained classification model. An example of the classification model in the present embodiment is a deep neural network based on deep training. The classification model in the present embodiment performs a task requiring high safety. An example of the task requiring high safety is a task for identifying objects surrounding an autonomous vehicle, or a task for detecting lesions from medical images in a medical diagnostic device.

In recent years, efforts to utilize deep neural networks based on deep training in an autonomous driving technology and a medical diagnostic technology that require high safety, have progressed. Because misclassification of deep neural networks may lead to serious consequences in the technical field requiring safety, it is strongly required to analyze the risk of accidents caused by certain types of misclassification.

The impact of misclassification is not uniform among types, and each type has a different risk level depending on the severity and frequency of accidents that may occur. For example, in the case of the autonomous driving technology, misclassification of a passenger car in the traveling direction of an autonomous vehicle as a truck has little impact on safety. On the other hand, misclassification of a pedestrian as a motorcyclist increases the possibility of accidents.

When the prediction performance of a deep neural network is evaluated with safety in mind and the prediction performance is insufficient, retraining with additional training data is considered. However, because retraining of a deep neural network corrects all parameters, the intended risk may not be sufficiently reduced or an unintended risk may be increased.

The method disclosed in Non-Patent Document 1 optimizes parameters affecting misclassification. In this method, first, the parameter (hereinafter also referred to as "suspect parameter") which seems to have the most influence on misclassification is detected by the defect localization method. Then, by metaheuristic optimization, an alternative value (hereinafter also referred to as an "alternative parameter value") of the suspect parameter which reduces misclassification while maintaining the positive classification, is searched.

However, the method disclosed in Non-Patent Document 1 corrects the parameters collectively for various types of misclassifications without considering the types of misclassifications. Therefore, it is not possible to correct the parameters considering the risk levels of each type of misclassification.

The machine learning system of the present embodiment aims at appropriately correcting the deep neural network for multiple types of misclassifications. In particular, the machine learning system of the present embodiment aims at appropriately correcting the deep neural network considering the risk levels of each type of misclassification.

<Overall configuration of the machine learning system>

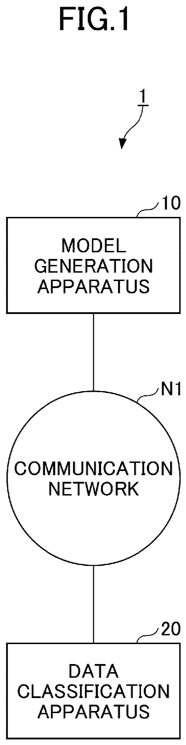

The overall configuration of the machine learning system of the present embodiment will be described with reference to FIG. 1. FIG. 1 is a block diagram illustrating an example of the overall configuration of the machine learning system of the present embodiment.

As illustrated in FIG. 1, a machine learning system 1 in the present embodiment includes a model generation apparatus 10 and a data classification apparatus 20. The model generation apparatus 10 and the data classification apparatus 20 are connected so as to enable data communication via a communication network N1 such as a local area network (LAN) or the Internet.

The model generation apparatus 10 is an information processing apparatus such as a personal computer, workstation, or server that trains a classification model. The model generation apparatus 10 trains a classification model based on the training data to which a ground truth label is attached. The model generation apparatus 10 corrects the trained classification model based on misclassification data incorrectly classified by the trained classification model. The classification model generated by the model generation apparatus 10 is output to a data classification apparatus 20.

The data classification apparatus 20 is an information processing apparatus such as a personal computer, a workstation, or a server for classifying target data. The data classification apparatus 20 inputs the target data to be classified into the classification model generated by the model generation apparatus 10, and outputs the classification result of classifying the target data.

The overall configuration of the machine learning system 1 illustrated in FIG. 1 is an example, and there may be various system configuration examples according to the application and the purpose. For example, more than one of the model generation apparatus 10 and the data classification apparatus 20 may be included in the machine learning system 1. For example, the model generation apparatus 10 or the data classification apparatus 20 may be implemented by more than one computer or as a cloud computing service. The segmentation of devices such as the model generation apparatus 10 and the data classification apparatus 20 illustrated in FIG. 1 is an example.

<Hardware configuration of the machine learning system>

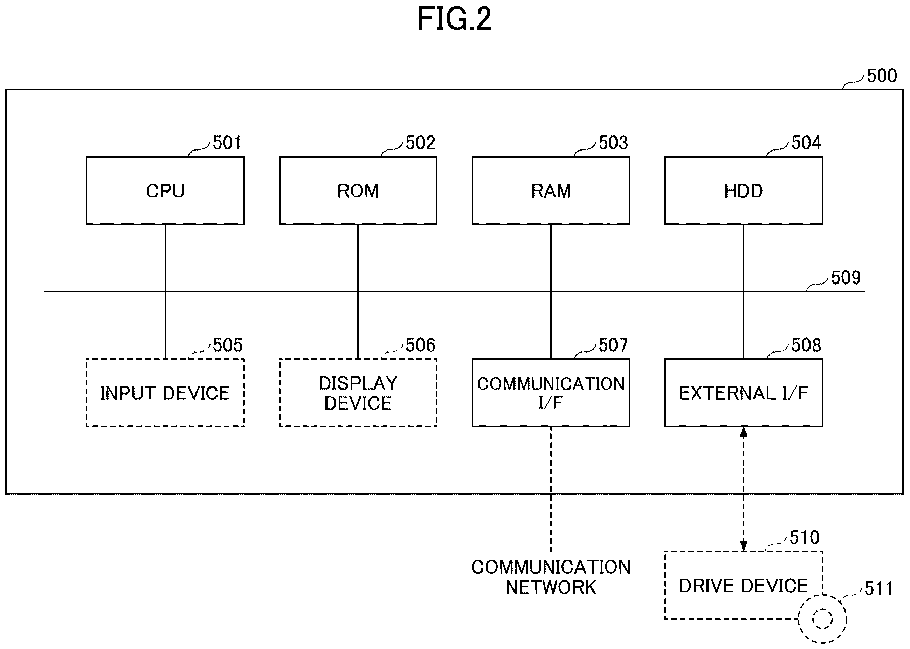

The hardware configuration of each device included in the machine learning system 1 of the present embodiment will be described with reference to FIG. 2.

<<Hardware configuration of computer>>

The model generation apparatus 10 and the data classification apparatus 20 in the present embodiment are implemented by, for example, a computer. FIG. 2 is a block diagram illustrating an example of the hardware configuration of the computer in the present embodiment.

As illustrated in FIG. 2, a computer 500 in the present embodiment includes a CPU (Central Processing Unit) 501, a ROM (Read Only Memory) 502, a RAM (Random Access Memory) 503, a HDD (Hard Disk Drive) 504, an input device 505, a display device 506, a communication I/F (interface) 507, and an external I/F 508. The CPU 501, the ROM 502, and the RAM 503 form what is referred to as a computer. Each piece of the hardware of the computer 500 is connected to each other via a bus line 509. The input device 505 and the display device 506 may be connected to the external I/F 508 for use.

The CPU 501 is an arithmetic device that loads programs and data from a storage device such as the ROM 502 or the HDD 504 into the RAM 503 and executes processing, thereby implementing the control and functions of the entire computer 500. The computer 500 may have a GPU (Graphics Processing Unit) in addition to the CPU 501 or in place of the CPU 501.

The ROM 502 is an example of a nonvolatile semiconductor memory (storage device) capable of retaining programs and data even when the power is turned off. The ROM 502 functions as a main storage device for storing various programs and data necessary for the CPU 501 to execute various programs installed in the HDD 504. Specifically, the ROM 502 stores boot programs such as BIOS (Basic Input/Output System) and EFI (Extensible Firmware Interface) that are executed when the computer 500 is started, and data such as OS (Operating System) settings and network settings.

The RAM 503 is an example of a volatile semiconductor memory (storage device) capable of erasing programs and data when the power is turned off. The RAM 503 is, for example, a DRAM (Dynamic Random Access Memory) or SRAM (Static Random Access Memory). The RAM 503 provides a work area where various programs installed in the HDD 504 are expanded when executed by the CPU 501.

The HDD 504 is an example of a nonvolatile storage device storing programs and data. The programs and data stored in the HDD 504 include an OS, which is the basic software for controlling the entire computer 500, and applications that provide various functions on the OS. Instead of the HDD 504, the computer 500 may use a storage device (e.g., SSD: Solid State Drive) that uses a flash memory as a storage medium.

The input device 505 includes a touch panel, operation keys and buttons, and a keyboard and a mouse used by the user to input various signals, and a microphone that inputs sound data such as voice sound.

The display device 506 includes a display such as a liquid crystal or an organic EL (ElectroLuminescence) for displaying a screen, and a speaker for outputting sound data such as voice sound.

The communication I/F 507 is an interface that is connected to a communication network and allows the computer 500 to perform data communication.

The external I/F 508 is an interface with an external device. The external device includes a drive device 510 or the like.

The drive device 510 is a device for setting a recording medium 511. The recording medium 511 here includes a medium for recording information optically, electrically, or magnetically, such as a CD-ROM, flexible disk, magneto-optical disk, or the like. The recording medium 511 may also include a semiconductor memory for recording information electrically, such as a ROM, a flash memory, or the like. Thus, the computer 500 can read and/or write information from/to the recording medium 511 via the external I/F 508.

Various programs installed on the HDD 504 are installed by, for example, setting the distributed recording medium 511 to the drive device 510 connected to the external I/F 508, and reading various programs recorded on the recording medium 511 by the drive device 510. Alternatively, various programs installed in the HDD 504 may be installed by downloading the programs from another network different from the communication network via the communication I/F 507.

<Functional configuration of the machine learning system>

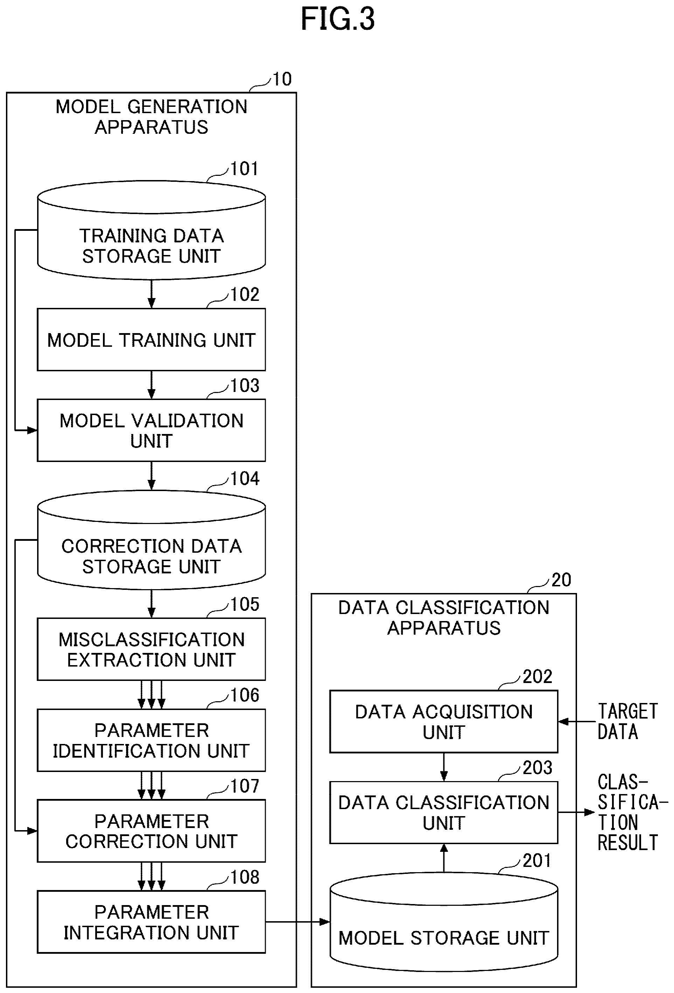

The functional configuration of the machine learning system in the present embodiment will be described with reference to FIG. 3. FIG. 3 is a block diagram illustrating an example of the functional configuration of the machine learning system 1 in the present embodiment.

<<Functional configuration of the model generation apparatus>>

As illustrated in FIG. 3, the model generation apparatus 10 in the present embodiment includes a training data storage unit 101, a model training unit 102, a model validation unit 103, a correction data storage unit 104, a misclassification extraction unit 105, a parameter identification unit 106, a parameter correction unit 107, and a parameter integration unit 108.

The model training unit 102, the model validation unit 103, the misclassification extraction unit 105, the parameter identification unit 106, the parameter correction unit 107, and the parameter integration unit 108 are implemented, for example, by a process that the CPU 501 is caused to execute by a program loaded in the RAM 503 from the HDD 504 illustrated in FIG. 2. The training data storage unit 101 and the correction data storage unit 104 are implemented, for example, by using the HDD 504 illustrated in FIG. 2.

The training data storage unit 101 stores a plurality of pieces of training data in advance. The training data is data used for training a classification model. A ground truth label indicating a ground truth value of classification is attached to the training data. The number of pieces of training data varies depending on the type of classification model, but may be any number as long as the number is a sufficient amount to train a classification model.

The model training unit 102 trains a classification model based on the training data read from the training data storage unit 101. The structure of the classification model in the present embodiment is, for example, a deep neural network. An example of the classification model is an image recognition model based on a convolutional neural network referred to as VGG16. Another example of the classification model is an image recognition model with a network of encoders and decoders referred to as ENetB7. The network structure of the classification model is not limited to these, and any model that executes a classification task based on a deep neural network may be used. The training method of the classification model differs depending on the type of the classification model, but a known training algorithm may be used.

The model validation unit 103 classifies a plurality of pieces of validation data based on the trained classification model generated by the model training unit 102. The validation data is data whose ground truth value of classification is known. The validation data may be, for example, extracted from the training data to which a ground truth label is attached, or data different from the training data may be collected and a ground truth label may be attached automatically or manually.

The model validation unit 103 divides the validation data into correct classification data and misclassification data based on the classification result of the validation data. The correct classification data is correctly classified validation data. The misclassification data is incorrectly classified validation data. Whether the data is correctly classified or not can be determined by comparing the classification result of the validation data with the ground truth label. That is, the model validation unit 103 defines the validation data in which the classification result and the ground truth label match as the correct classification data, and defines the validation data in which the classification result and the ground truth label do not match as the misclassification data.

The correction data storage unit 104 stores the correction data including the correct classification data and the misclassification data generated by the model validation unit 103. The correction data is data for correcting the trained classification model generated by the model training unit 102.

The misclassification extraction unit 105 extracts the misclassification data for each type of misclassification from the correction data stored in the correction data storage unit 104. The type of misclassification can be determined according to the combination of the classification result by the model validation unit 103 and the ground truth value of classification. The risk level is predetermined for the type of misclassification.

The parameter identification unit 106 identifies a suspicious parameter from the parameters of the trained classification model for each type of misclassification based on the misclassification data extracted by the misclassification extraction unit 105. The suspicious parameter can be identified by, for example, a defect localization technique. The method for identifying a suspicious parameter by the defect localization technique is disclosed, for example, in Non-Patent Document 1.

The parameter correction unit 107 corrects the suspicious parameter identified by the parameter identification unit 106 for each type of misclassification based on the correct classification data stored in the correction data storage unit 104 and the misclassification data extracted by the misclassification extraction unit 105. The alternative parameter value of the suspicious parameter can be searched by, for example, a technique such as metaheuristic optimization. A method for searching the alternative parameter value by metaheuristic optimization is disclosed, for example, in Non-Patent Document 1.

The parameter integration unit 108 integrates a parameter (hereinafter also referred to as "correction parameter") obtained by replacing the suspicious parameter with the alternative parameter value for each type of misclassification. The parameter integration unit 108 generates a classification model (hereinafter also referred to as "integrated model") obtained by replacing the parameters of the trained classification model generated by the model training unit 102 with an integrated parameter obtained by integrating correction parameters. The parameter integration unit 108 outputs the integrated model to the data classification apparatus 20.

<<Functional configuration of the data classification apparatus>>

As illustrated in FIG. 3, the data classification apparatus 20 in the present embodiment includes a model storage unit 201, a data acquisition unit 202, and a data classification unit 203.

The data acquisition unit 202 and the data classification unit 203 are implemented, for example, by a process that the CPU 501 is caused to execute by a program loaded in the RAM 503 from the HDD 504 illustrated in FIG. 2. The model storage unit 201 is implemented, for example, by using the HDD 504 illustrated in FIG. 2.

The model storage unit 201 stores a trained classification model. The classification model is an integrated model that is trained by the model generation apparatus 10 and in which the parameters are corrected for a plurality of types of misclassifications.

The data acquisition unit 202 acquires target data to be classified. The target data is data whose ground truth value of classification is unknown.

The data classification unit 203 classifies the target data by inputting the target data acquired by the data acquisition unit 202 into a trained classification model read from the model storage unit 201. The data classification unit 203 outputs the classification result of the target data.

<Processing procedure of the machine learning system>

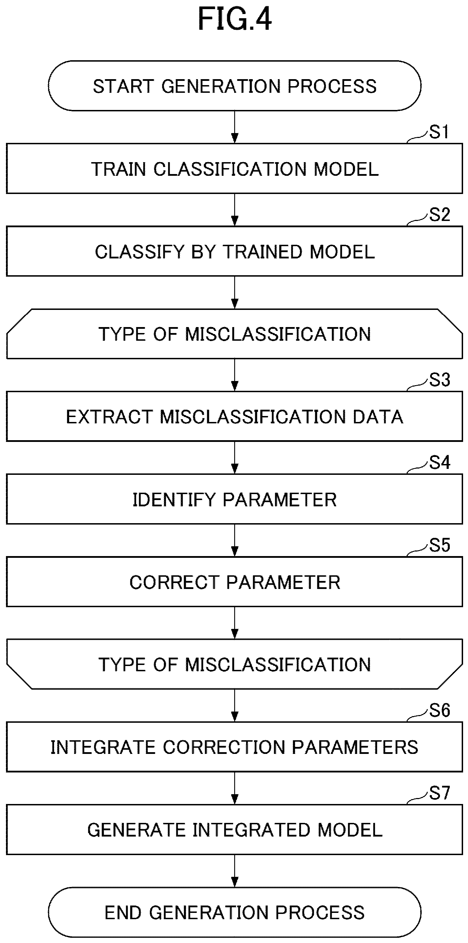

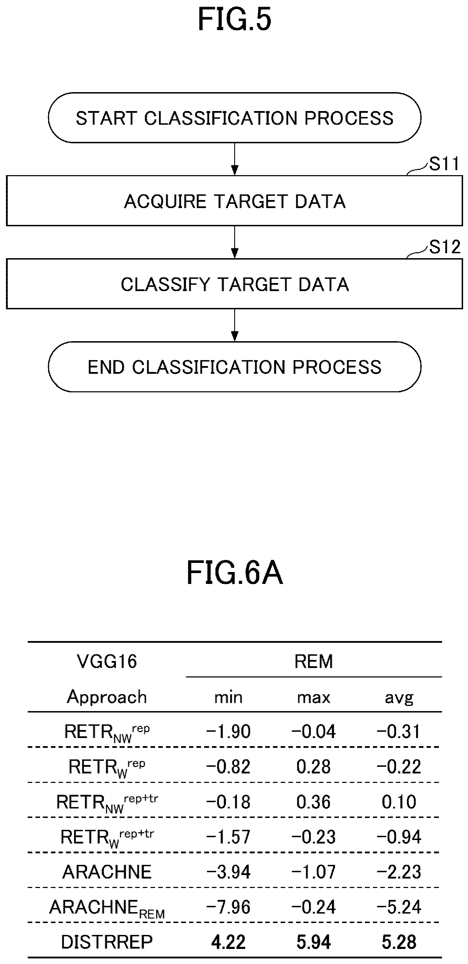

The machine training method executed by the machine learning system 1 in the present embodiment will be described with reference to FIGS. 4 and 5. The machine training method in the present embodiment includes a generation process executed by the model generation apparatus 10 (see FIG. 4) and a classification process executed by the data classification apparatus 20 (see FIG. 5).

<<Generation process>>

The generation process in the present embodiment will be described in detail with reference to FIG. 4. FIG. 4 is a flowchart illustrating an example of the generation process in the present embodiment. The generation process is a process of generating a classification model based on the training data.

In step S1, the model training unit 102 of the model generation apparatus 10 reads the training data from the training data storage unit 101. Here, the model training unit 102 reads a part (for example, 3/4 of the entire data) of the training data stored in the training data storage unit 101. Next, the model training unit 102 trains a classification model based on the read training data. Subsequently, the model training unit 102 sends the trained classification model to the model validation unit 103.

In step S2, the model validation unit 103 of the model generation apparatus 10 receives the trained classification model from the model training unit 102. Next, the model validation unit 103 acquires a plurality of pieces of validation data. Here, the model validation unit 103 reads, as validation data, the training data (that is, 1/4 of the entire data) that was not used for training the classification model, from the training data storage unit 101.

The model validation unit 103 inputs each piece of the read validation data to the trained classification model to calculate the classification result of the validation data. Next, the model validation unit 103 compares the classification result output from the trained classification model with the ground truth label attached to the validation data.

When the classification result and the ground truth label match, the model validation unit 103 adds the validation data to the correct classification data. On the other hand, when the classification result and the ground truth label do not match, the model validation unit 103 adds the validation data to the misclassification data. Then, the model validation unit 103 stores correction data including correct classification data and misclassification data in the correction data storage unit 104.

In step S3, the misclassification extraction unit 105 of the model generation apparatus 10 determines the type of misclassification to be processed out of a plurality of predetermined types of misclassifications. Next, the misclassification extraction unit 105 reads the correction data stored in the correction data storage unit 104. Subsequently, the misclassification extraction unit 105 extracts misclassification data corresponding to the type of misclassification to be processed from the read correction data. Subsequently, the misclassification extraction unit 105 sends the extracted misclassification data to the parameter identification unit 106.

In step S4, the parameter identification unit 106 of the model generation apparatus 10 receives the misclassification data from the misclassification extraction unit 105. Next, the parameter identification unit 106 identifies a suspicious parameter among the parameters of the trained classification model based on the received misclassification data. Subsequently, the parameter identification unit 106 sends information indicating the identified suspicious parameter to the parameter correction unit 107.

In step S5, the parameter correction unit 107 of the model generation apparatus 10 receives information indicating a suspicious parameter from the parameter identification unit 106. Next, the parameter correction unit 107 searches for an alternative parameter value of the suspicious parameter. Subsequently, the parameter correction unit 107 sends, to the parameter integration unit 108, a correction parameter obtained by replacing the suspicious parameter with an alternative parameter value.

The parameter correction unit 107 may output a classification model (hereinafter also referred to as "corrected model") obtained by replacing the suspicious parameter with an alternative parameter value. The parameter correction unit 107 may output a correction model together with the correction parameter, or may output a correction model instead of the correction parameter.

The search method for the alternative parameter value will be described in more detail. The parameter correction unit 107 searches for the alternative parameter value according to the technique disclosed in Non-Patent Document 1. The search variable x in Non-Patent Document 1 corresponds to an alternative parameter value. The suitability function $f_{rep}$ in Non-Patent Document 1 is calculated by using the misclassification data extracted by the misclassification extraction unit 105 and the correct classification data generated by the model validation unit 103. The parameter correction unit 107 adjusts the search variable x so that the suitability function $f_{rep}$ is maximized, and outputs the search variable x when the suitability function $f_{rep}$ converges as an alternative parameter value.

Formula (1) is an example of the suitability function $f_{rep}$ in the present embodiment.
[Formula 1]

$$f_{rep}(ind) = \frac{|\{t \in NI | M_{ind}(t) = label(t)\}| + 1}{loss(NI) + 1} + \frac{|\{t \in PI | M_{ind}(t) = label(t)\}| + 1}{loss(PI) + 1} \quad \cdots (1)$$

Here, the notation of NI is an assembly of misclassification data. The notation of PI is an assembly of correct classification data. The notation of $M_{ind}$ is a classification model in which the suspicious parameter is changed, and the notation of $M_{ind}(t)$ is the result of classifying input t by $M_{ind}$. The notation of label(t) is the ground truth label of input t. The notation of loss is the gradient loss in the error back propagation method.

The processing from step S3 to step S5 is repeatedly executed for each type of misclassification. Thus, a correction parameter is generated for each type of misclassification.

In step S6, the parameter integration unit 108 of the model generation apparatus 10 receives correction parameters for each type of misclassification from the parameter correction unit 107. Next, the parameter integration unit 108 integrates the received correction parameters for each type of misclassification. Thus, an integrated parameter integrating the correction parameters, is generated.

The method of integrating correction parameters will be described in more detail. The parameter integration unit 108 searches for integrated parameters based on the objective function REM based on the risk level of misclassification. The objective function REM calculates a score obtained by weighting the classification result by the classification model with the risk level associated with the type of misclassification. The parameter integration unit 108 searches for integrated parameters such that the score calculated by the objective function REM becomes large. An evolutionary computation such as a genetic algorithm can be used to search for integrated parameters.

Formula (2) is an example of the objective function REM in the present embodiment.

[Formula 2]

$$REM = -mw \cdot \left( \begin{array}{c} rw_1 \cdot \left( MR^{ped} + MR^{car,rider} \right) \\ +rw_2 \cdot \left( MR^{rider} + MR^{car,truck} + MR^{bicy} \right) \\ +rw_3 \cdot \left( MR^{ped,rider} + MR^{rider,ped} + MR^{motor,ped} \right) \end{array} \right) \quad \cdots (2)$$
$$+aw \cdot \left( \begin{array}{c} rw_4 \cdot AC^{ped} \\ +rw_5 \cdot \left( AC^{car} + AC^{bicy} \right) \\ +rw_6 \cdot AC^{rider} \end{array} \right)$$

Here, the notation of $MR^{\alpha}$ is the probability of misclassifying $\alpha$. The notation of $MR^{\alpha,\,\beta}$ is the probability of misclassifying $\alpha$ as $\beta$. The notation of $AC^{\alpha}$ is the probability of correctly classifying $\alpha$. The notations of ped, car, rider, truck, bicy, and motor are labels indicating a pedestrian, a passenger car, a motorcycle driver, a truck, a bicycle, and a motorcycle, respectively. The notations of $rw_1$ to $rw_6$ are weights predetermined according to the risk level. The notations of mw and aw are weights identifying the relative importance of terms 1 and 2. Here, the notations of $MR^{ped}$, $MR^{car,\,rider}$ are defined as risk level 1, the notations of $MR^{rider}$, $MR^{car,\,truck}$, and $MR^{bicy}$ are defined as risk level 2, and the notations of $MR^{ped,\,rider}$, $MR^{rider,\,ped}$, $MR^{motor,\,ped}$ are defined as risk level 3.

The search range of integrated parameters is a parameter group including all correction parameters for each type of misclassification. The parameter group is formed by changing the weights, assuming that the parameters corrected in multiple misclassifications are a weighted sum of the maximum and minimum alternative parameter values, and the parameters corrected in one misclassification are a weighted sum of the original parameter value and the alternative parameter value. That is, the parameter integration unit 108 searches for the optimum combination of the weights, assuming that the integrated parameter is represented by the weighted sum of the alternative parameter values.

In step S7, the parameter integration unit 108 replaces the parameters of the trained classification model with the searched integrated parameters. Thus, an integrated model including the integrated parameters is generated. The parameter integration unit 108 sends the integrated model to the data classification apparatus 20.

The data classification apparatus 20 receives the integrated model from the model generation apparatus 10. The data classification apparatus 20 stores the received integrated model as a trained classification model in the model storage unit 201.

<<Classification process>>

The classification process in the present embodiment will be described in detail with reference to FIG. 5. FIG. 5 is a flowchart illustrating an example of the classification process in the present embodiment.

In step S11, the data acquisition unit 202 of the data classification apparatus 20 acquires the target data to be classified. Next, the data acquisition unit 202 sends the acquired target data to the data classification unit 203.

In step S12, the data classification unit 203 of the data classification apparatus 20 receives the target data from the data acquisition unit 202. Next, the data classification unit 203 reads the trained classification model stored in the model storage unit 201. Subsequently, the data classification unit 203 inputs the target data to the read trained classification model to calculate the classification result of the target data. Then, the data classification unit 203 outputs the classification result of the target data.

<Evaluation result>

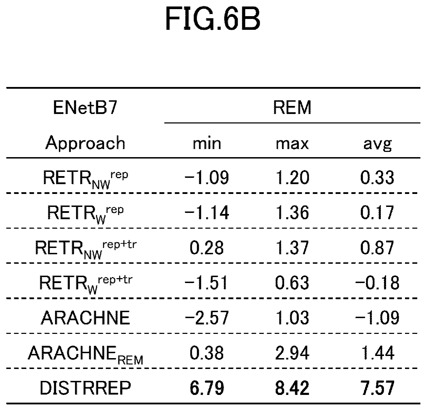

The results of evaluating the classification performance of the classification model in the present embodiment will be described with reference to FIGS. 6A and 6B. FIG. 6A illustrates an example of the evaluation result for VGG16. FIG. 6B illustrates an example of the evaluation result for ENetB7.

FIG. 6A illustrates the results of comparison between a plurality of conventional techniques and the present embodiment for VGG16. $RETR_{NW}^{rep}$, $RETR_{W}^{rep}$, $RETR_{NW}^{rep+tr}$, and $RETR_{W}^{rep+tr}$ are conventional techniques that train a model by using training data and retrain only the final fully-connected layer by using correction data. ARACHNE and $ARACHNE_{REM}$ are conventional techniques that correct suspicious parameters by using misclassification data. DISTRRP is the method of the present embodiment.

An objective function REM was used as the correction evaluation index for comparing each method. REM is a score calculated by weighting the classification result by the classification model according to the risk level as indicated in formula (2). FIG. 6 illustrates changes in REM before and after the retraining or the correction.

As illustrated in FIG. 6A, in the case of VGG16, the correction evaluation index of the method of the present embodiment was all positive in the minimum, maximum, and average, and the classification accuracy was greatly improved. On the other hand, in other conventional techniques, the correction evaluation index was in a range including negative values, and the improvement in the classification accuracy was limited. Therefore, the correction evaluation index of the method of the present embodiment was improved more than that of other conventional techniques.

FIG. 6B illustrates the results of comparison between a plurality of conventional techniques and the present embodiment for ENetB7. As illustrated in FIG. 6B, also in the case of ENetB7, the correction evaluation index of the method of the present embodiment was improved more than that of other conventional techniques.

The evaluation results illustrated in FIGS. 6A and 6B indicate that the machine learning system 1 of the present embodiment can correct the classification model with high accuracy for multiple types of misclassification.

Namely, the machine learning system 1 of the present embodiment can generate correction parameters for each type of misclassification by considering the risk level corresponding to the type of misclassification, and the method of the present embodiment greatly improved the classification accuracy in the case of VGG16 and in the case of ENetB7. On the other hand, ARACHNE, which is an integrated model in which all of the correct classification parameters and misclassification parameters are properly integrated in a balanced manner and is a conventional technique, decreases the classification accuracy in the case of VGG16 and in the case of ENetB7. Further, in the case of ARACHNE$_{REM}$, which is a conventional technique, the classification accuracy is only slightly improved compared to the machine learning system 1 of the present embodiment even when ENetB7 is used.

Thus, it has been indicated that, when generating parameters, it is effective to generate correction parameters for each type of misclassification by considering the risk level corresponding to the type of misclassification, and when integrating parameters, it is effective to search the integrated parameters such that the score calculated by the objective function REM increases based on the objective function REM in line with the risk level of misclassification.

<Effect of the first embodiment>

The model generation apparatus 10 in the present embodiment identifies a suspicious parameter for each type of misclassification based on misclassification data misclassified by the trained classification model, corrects the suspicious parameter for each type of misclassification, and generates an integrated model including an integrated parameter in which the corrected parameters are integrated. Therefore, according to the model generation apparatus 10 in the present embodiment, the model can be appropriately corrected for multiple types of misclassification.

The model generation apparatus 10 in the present embodiment identifies a suspicious parameter for each type of misclassification by a defect localization method. Therefore, according to the model generation apparatus 10 in the present embodiment, the cause of misclassification can be accurately identified for each type of misclassification.

The model generation apparatus 10 in the present embodiment generates a correction parameter for correcting a suspicious parameter for each type of misclassification. Therefore, according to the model generation apparatus 10 in the present embodiment, a correction parameter specialized for reducing the risk can be obtained for each type of misclassification.

The model generation apparatus 10 in the present embodiment integrates correction parameters for each type of misclassification based on an objective function in line with the risk level. Therefore, according to the model generation apparatus 10 in the present embodiment, the correction parameters specialized for each type of misclassification can be identified, and the parameters can be adjusted efficiently and appropriately in line with the risk level.

The model generation apparatus 10 in the present embodiment repeats the search for the integrated parameters from the parameter group including the correction parameters for each type of misclassification by a method such as evolutionary computation. Therefore, according to the model generation apparatus 10 in the present embodiment, the trial and error of the balance adjustment in line with the trade-off can be efficiently repeated.

[Second embodiment]

The second embodiment of the present invention is a machine learning system 300 provided with a plurality of clients 330 including a model generation apparatus 310 having a part of the functions of the model generation apparatus 10 described in the first embodiment, and is further provided with a communication network N2 and a server 340 for transmitting and receiving information with the plurality of clients 330. The machine learning system 300 can jointly repair a DNN model without sharing the raw data of the plurality of clients 330.

The effectiveness of a DNN repair technique depends on the quantity and quality of data used for DNN repair. For example, if data can be shared, more diverse and representative data can be obtained, and a more reliable DNN can be obtained. However, despite these advantages, data has not been actively shared for repairing due to both intellectual property protection and privacy reasons. In the present embodiment, a system is provided that enables members using the same DNN to jointly repair a DNN without sharing data.

In the machine learning system 300, intermediate calculation results that cannot be obtained from each original raw data are shared with the server 340, and a mechanism is introduced to reaggregate calculation of metrics (such as suspicious scores and fitness values) required for DNN repair by dividing the data into various data sets. Thus, the same level of repair performance as repairing a single DNN can be obtained without sharing individual raw data.

<Overall configuration of the machine learning system>

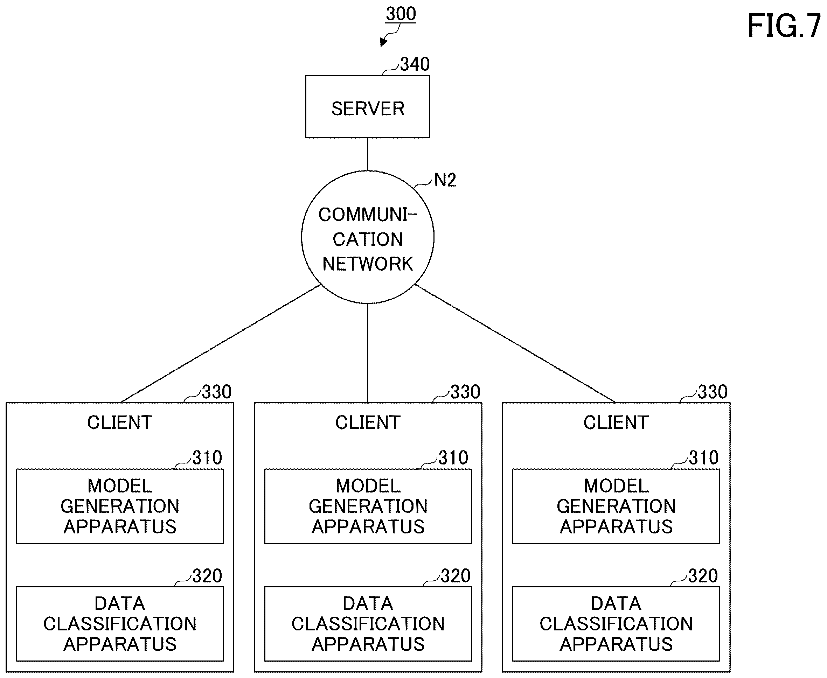

The overall configuration of the machine learning system according to the second embodiment will be described with reference to FIG. 7. FIG. 7 is a block diagram illustrating an example of the overall configuration of the machine learning system according to the present embodiment.

As illustrated in FIG. 7, the machine learning system 300 according to the present embodiment includes a plurality of clients 330 and a server 340. Each client 330 includes a model generation apparatus 310 and a data classification apparatus 320. Each of the clients 330 and the server 340 are connected so as to enable data communication via a communication network N2 such as a local area network (LAN) or the Internet.

The model generation apparatus 310 is an information processing apparatus such as a personal computer, a workstation, or a server that trains a classification model. The model generation apparatus 310 trains a classification model based on training data to which a ground truth label is attached in cooperation with the server 340, and corrects the trained classification model based on misclassification data incorrectly classified by the trained classification model. The corrected classification model is output to the data classification apparatus 320.

The data classification apparatus 320 is equivalent to the data classification apparatus 20 illustrated in the first embodiment, and is an information processing apparatus such as a personal computer, a workstation, or a server that classifies target data. The data classification apparatus 320 inputs target data to be classified to a classification model generated by the model generation apparatus 310 and the server 340, and outputs a classification result in which the target data is classified.

<Hardware configuration of machine learning system>

The hardware configuration of each device included in the machine learning system 300 in the present embodiment is the same as that illustrated in FIG. 2 as the hardware configuration of the machine learning system 1 in the first embodiment, and a description thereof is omitted.

<Functional configuration of machine learning system>

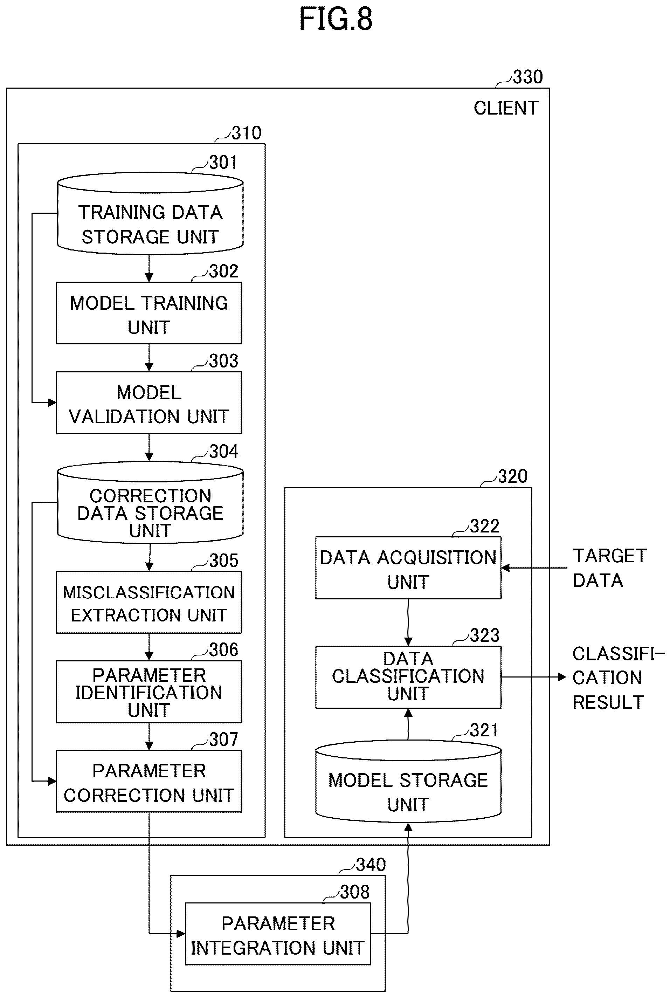

The functional configuration of the machine learning system 300 in the present embodiment will be described with reference to FIG. 8. FIG. 8 is a block diagram illustrating an example of the functional configuration of the machine learning system 300 in the present embodiment.

<<Functional configuration of the model generation apparatus>>

As illustrated in FIG. 8, the model generation apparatus 310 in the present embodiment is arranged in a plurality of clients 330 and includes a training data storage unit 301, a model training unit 302, a model validation unit 303, a correction data storage unit 304, a misclassification extraction unit 305, a parameter identification unit 306, and a parameter correction unit 307.

On the other hand, a parameter integration unit 308 is provided in the server 340, and the plurality of clients 330 and the server 340 are connected by a communication network N2.

The model training unit 302, the model validation unit 303, a misclassification extraction unit 305, a parameter identification unit 306, and a parameter correction unit 307 provided in the model generation apparatus 310 are implemented, for example, by a process that the CPU 501 is caused to execute by a program loaded in the RAM 503 from the HDD 504 illustrated in FIG. 2. The training data storage unit 301 and the correction data storage unit 304 are implemented, for example, by using the HDD 504 illustrated in FIG. 2.

On the other hand, the parameter integration unit 308 is provided as a function of the server 340. Because the server 340 has the same hardware configuration as illustrated in FIG. 2, the parameter integration unit 308 is implemented, for example, by a process that the CPU 501 is caused to execute by a program loaded in the RAM 503 from the HDD 504 illustrated in FIG. 2.

Here, the training data storage unit 301, the model training unit 302, the model validation unit 303, the correction data storage unit 304, the misclassification extraction unit 305, the parameter identification unit 306, and the parameter correction unit 307 have the same functions as the training data storage unit 101, the model training unit 102, the model validation unit 103, the correction data storage unit 104, the misclassification extraction unit 105, the parameter identification unit 106, and the parameter correction unit 107 of the machine learning system 1 of the first embodiment, and a detailed description thereof is omitted.

On the other hand, the parameter integration unit 308 is provided in the server 340. Alternative parameters, which are generated by the parameter correction unit 307 arranged in the model generation apparatus 310 in each client 330, are input to the parameter integration unit 308 via a communication network N2.

The parameter integration unit 308 integrates correction parameters, each correction parameter being a parameter in which a suspected parameter is replaced with an alternative parameter value for each type of misclassification. The parameter integration unit 308 generates an integrated model which is a classification model in which parameters of the trained classification model generated by the model training unit 302 are replaced with integrated parameters in which correction parameters are integrated. The parameter integration unit 308 outputs the integrated model to the data classification apparatus 320 provided in each client via a communication network N2.

<<Functional configuration of the data classification apparatus>>

As illustrated in FIG. 8, the data classification apparatus 320 in the present embodiment includes a model storage unit 321, a data acquisition unit 322, and a data classification unit 323.

The data acquisition unit 322 and the data classification unit 323 are implemented, for example, by a process that the CPU 501 is caused to execute by a program loaded in the RAM 503 from the HDD 504 illustrated in FIG. 2. The model storage unit 321 is implemented, for example, by using the HDD 504 illustrated in FIG. 2.

The functional configuration of the model storage unit 321, the data acquisition unit 322, and the data classification unit 323 is the same as that of the model storage unit 201, the data acquisition unit 202, and the data classification unit 203 in the data classification apparatus 20 illustrated in the first embodiment, and a detailed description thereof is omitted.

<Processing procedure of the machine learning system>

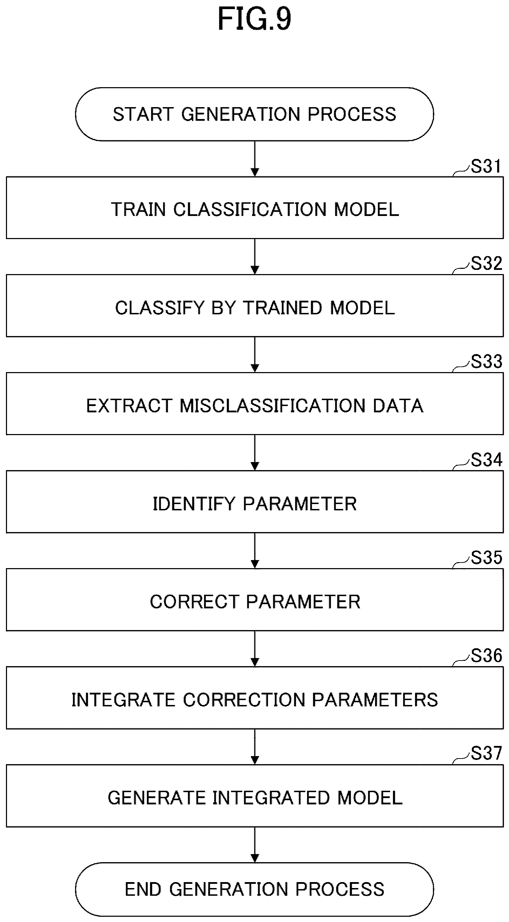

Of the machine training methods executed by the machine learning system 300 in the present embodiment, a generation process different from the machine training method of the machine learning system 1 indicated in the first embodiment, will be described with reference to FIG. 9.

<<Generation process>>

FIG. 9 is a flowchart illustrating an example of the generation process in the present embodiment. The generation process generates a classification model based on the training data.

In step S31, the model training unit 302 of the model generation apparatus 310 reads the training data from the training data storage unit 301. Here, the model training unit 302 reads a part (for example, 3/4 of the entire data) of the training data stored in the training data storage unit 301. Next, the model training unit 302 trains a classification model based on the read training data. Subsequently, the model training unit 302 sends the trained classification model to the model validation unit 303.

In step S32, the model validation unit 303 of the model generation apparatus 310 receives the trained classification model from the model training unit 302. Next, the model validation unit 303 acquires a plurality of pieces of validation data. Here, the model validation unit 303 reads the training data (that is, 1/4 of the entire data) not used for training the classification model from the training data storage unit 301 as validation data.

The model validation unit 303 inputs each piece of the read validation data to the trained classification model to calculate the classification result of the validation data. Next, the model validation unit 303 compares the classification result output from the trained classification model with the ground truth label attached to the validation data.

When the classification result and the ground truth label match, the model validation unit 303 adds the validation data to the correct classification data. On the other hand, when the classification result and the ground truth label do not match, the model validation unit 303 adds the validation data to the misclassification data. Then, the model validation unit 303 stores correction data including correct classification data and misclassification data in the correction data storage unit 304.

In step S33, the misclassification extraction unit 305 of the model generation apparatus 310 determines the type of misclassification to be processed out of a plurality of predetermined types of misclassification. Next, the correction data stored in the correction data storage unit 304 is read out. Subsequently, the misclassification extraction unit 305 extracts misclassification data corresponding to the type of misclassification to be processed from the read correction data. Subsequently, the misclassification extraction unit 305 sends the extracted misclassification data to the parameter identification unit 306.

In step S34, the parameter identification unit 306 of the model generation apparatus 310 receives the misclassification data from the misclassification extraction unit 305. Next, the parameter identification unit 306 identifies a suspicious parameter among the parameters of the trained classification model based on the received misclassification data. Subsequently, the parameter identification unit 306 sends information indicating the identified suspicious parameter to the parameter correction unit 307.

In step S35, the parameter correction unit 307 of the model generation apparatus 310 receives information indicating a suspicious parameter from the parameter identification unit 306. Next, the parameter correction unit 307 searches for an alternative parameter value of the suspicious parameter. Subsequently, the parameter correction unit 307 sends a correction parameter obtained by replacing the suspicious parameter with an alternative parameter value to the parameter integration unit 308 arranged in the server 340.

The method for searching for the alternative parameter value can be the same as that described in the first embodiment.

Here, the processing from step S33 to step S35 is repeatedly executed for each type of misclassification. Thus, a correction parameter is generated for each type of misclassification.

In step S36, the parameter integration unit 308 arranged in the server 340 receives a correction parameter for each type of misclassification from each parameter correction unit 307 provided in the model generation apparatus 310 in each client 330, via the communication network N2. Next, the parameter integration unit 308 integrates the received correction parameters for each type of misclassification. Thus, an integrated parameter, in which the correction parameters are integrated, is generated.

A method of integrating the correction parameters will be described below. The parameter integration unit 308 searches for an integrated parameter based on the objective function REM in line with the risk level of misclassification. The objective function REM calculates a score obtained by weighting the classification result obtained by the classification model with the risk level associated with the type of misclassification. The same function as the formula (2) described in the first embodiment can be used as the objective function REM. The parameter integration unit 308 searches for an integrated parameter such that the score calculated by the objective function REM becomes large. An evolution calculation such as a genetic algorithm can be used to search for the integrated parameter.

The search range of the integrated parameter is a parameter group including all correction parameters for each type of misclassification sent from each client 330 to the server 340 via the communication network N2. The parameter group is formed by changing the weights, assuming that the parameters corrected in multiple misclassifications are a weighted sum of the maximum and minimum alternative parameter values, and the parameters corrected in one misclassification are a weighted sum of the original parameter value and the alternative parameter value. That is, the parameter integration unit 308 searches for the optimum combination of the weights, assuming that the integrated parameter is represented by the weighted sum of the alternative parameter values.

In step S37, the parameter integration unit 308 replaces the parameters of the trained classification model with the searched integrated parameter. Thus, an integrated model including the integrated parameter is generated. Then, the parameter integration unit 308 sends the integrated model to the data classification apparatus 320 provided in each client 330 via the communication network N2.

The data classification apparatus 320 receives the integrated model from the server 340. The data classification apparatus 320 stores the received integrated model in the model storage unit 321 as a trained classification model.

<<Classification process>>

The classification process in the present embodiment is the same as the classification process described in the first embodiment, and a description thereof is omitted.

<Effect of the second embodiment>

As described above, in the machine learning system 300 according to the second embodiment, the server 340 shares the intermediate calculation results from which the original raw data cannot be acquired, and performs the calculation necessary for DNN repair, so that the repair performance equivalent to that of a single DNN repair can be obtained without sharing the raw data held by each client.

[Supplemental note]

Each function of the above-described embodiments can be implemented by one or more processing circuits. The term "processing circuit" as used herein includes a processor programmed to perform each function by software, such as a processor implemented by an electronic circuit, and devices such as ASIC (Application Specific Integrated Circuit), DSP (Digital Signal Processor), FPGA (Field Programmable Gate Array), and conventional circuit modules designed to perform each of the functions described above.

Although the embodiments of the present invention have been described in detail above, the present invention is

**EP 4 660 892 A1**

not limited to these embodiments and can be modified or changed in various ways within the scope of the gist of the present invention described in the claims.

This application claims the priority of Japanese Patent Application No. 2023-14970 filed with the Japan Patent Office on February 3, 2023, the entire contents of which are incorporated herein by reference.

REFERENCE SIGNS LIST

1, 300 machine learning system
10, 310 model generation apparatus
101, 301 training data storage unit
102, 302 model training unit
103, 303 model validation unit
104, 304 correction data storage unit
105, 305 misclassification extraction unit
106, 306 parameter identification unit
107, 307 parameter correction unit
108, 308 parameter integration unit
20, 320 data classification apparatus
201, 321 model storage unit
202, 322 data acquisition unit
203, 323 data classification units
330 client
340 server

**Claims**

1. A model generation apparatus comprising:

   a parameter identification unit configured to identify a parameter affecting misclassification of misclassification data incorrectly classified by a trained classification model, among parameters of the classification model for each type of the misclassification, based on the misclassification data incorrectly classified by the trained classification model;
   a parameter correction unit configured to generate a correction parameter obtained by correcting the parameter identified by the parameter identification unit for each type of the misclassification; and
   a parameter integration unit configured to generate an integrated model including an integrated parameter obtained by integrating the correction parameters for each type of the misclassification.

2. The model generation apparatus according to claim 1, wherein the parameter integration unit searches for the integrated parameter from a parameter group including the correction parameter for each type of the misclassification, based on an objective function for weighting a classification result obtained by the classification model with a risk level associated with the type of the misclassification.

3. The model generation apparatus according to claim 2, wherein the parameter integration unit searches for the integrated parameter by using an evolutionary computation.

4. A machine learning system in which a plurality of clients and a server are configured to communicate via a network, wherein

   the client includes:

      a parameter identification unit configured to identify a parameter affecting misclassification of misclassification data incorrectly classified by a trained classification model, among parameters of the classification model for each type of the misclassification, based on the misclassification data incorrectly classified by the trained classification model; and
      a parameter correction unit configured to generate a correction parameter obtained by correcting the parameter identified by the parameter identification unit for each type of the misclassification, and to send the correction parameter to the server, and wherein

the server includes:
a parameter integration unit configured to generate an integrated model including an integrated parameter obtained by integrating the correction parameters for each type of the misclassification received from the plurality of the clients.

5. A model generation method executed by a computer, comprising:

a parameter identification step of identifying a parameter affecting misclassification of misclassification data incorrectly classified by a trained classification model, among parameters of the classification model for each type of the misclassification, based on the misclassification data incorrectly classified by the trained classification model;
a parameter correction step of generating a correction parameter obtained by correcting the parameter identified at the parameter identification step for each type of the misclassification; and
a parameter integration step of generating an integrated model including an integrated parameter obtained by integrating the correction parameters for each type of the misclassification.

6. A model generation method executed by a machine learning system in which a plurality of clients and a server are configured to communicate via a network, the model generation method comprising:

a parameter identification step of identifying, by the client, a parameter affecting misclassification of misclassification data incorrectly classified by a trained classification model, among parameters of the classification model for each type of the misclassification, based on the misclassification data incorrectly classified by the trained classification model;
a parameter correction step of generating, by the client, a correction parameter obtained by correcting the parameter identified at the parameter identification step for each type of the misclassification, and sending, by the client, the correction parameter to the server; and
a parameter integration step of generating, by the server, an integrated model including an integrated parameter obtained by integrating the correction parameters for each type of the misclassification received from the plurality of the clients.

7. A program that causes a computer to execute:

a parameter identification step of identifying a parameter affecting misclassification of misclassification data incorrectly classified by a trained classification model, among parameters of the classification model for each type of the misclassification, based on the misclassification data incorrectly classified by the trained classification model;
a parameter correction step of generating a correction parameter obtained by correcting the parameter identified at the parameter identification step for each type of the misclassification; and
a parameter integration step of generating an integrated model including an integrated parameter obtained by integrating the correction parameters for each type of the misclassification.

# FIG.1

1

MODEL
GENERATION
APPARATUS
10

N1

COMMUNICATION
NETWORK

DATA
CLASSIFICATION
APPARATUS
20

# FIG.2

```
                                    500
┌─────────────────────────────────────────────────────────────────────┐
│                                                                       │
│      501          502          503          504                       │
│  ┌─────────┐  ┌─────────┐  ┌─────────┐  ┌─────────┐                   │
│  │   CPU   │  │   ROM   │  │   RAM   │  │   HDD   │                    │
│  └─────────┘  └─────────┘  └─────────┘  └─────────┘                   │
│       │            │            │            │                        │
│  ─────┼────────────┼────────────┼────────────┼─────────────  509      │
│       │            │            │            │                        │
│     505          506          507          508                        │
│  ┌─────────┐  ┌─────────┐  ┌──────────────┐ ┌─────────────┐           │
│  │  INPUT  │  │ DISPLAY │  │COMMUNICATION │ │ EXTERNAL I/F│           │
│  │ DEVICE  │  │ DEVICE  │  │     I/F      │ │             │           │
│  └─────────┘  └─────────┘  └──────────────┘ └─────────────┘           │
│                                   ┆              ▲                     │
└───────────────────────────────────┆──────────────┆────────────────────┘
                                     ┆              ┆
                            COMMUNICATION           ▼   510
                              NETWORK          ┌─────────────┐
                                               │DRIVE DEVICE │  511
                                               └─────────────┘  ◎
```

EP 4 660 892 A1

# FIG.3

MODEL GENERATION APPARATUS — 10

TRAINING DATA STORAGE UNIT — 101

MODEL TRAINING UNIT — 102

MODEL VALIDATION UNIT — 103

CORRECTION DATA STORAGE UNIT — 104

MISCLASSIFICATION EXTRACTION UNIT — 105

PARAMETER IDENTIFICATION UNIT — 106

PARAMETER CORRECTION UNIT — 107

PARAMETER INTEGRATION UNIT — 108

DATA CLASSIFICATION APPARATUS — 20

DATA ACQUISITION UNIT — 202

TARGET DATA

DATA CLASSIFICATION UNIT — 203

CLASSIFICATION RESULT

MODEL STORAGE UNIT — 201

# FIG.4

START GENERATION PROCESS

↓ S1

TRAIN CLASSIFICATION MODEL

↓ S2

CLASSIFY BY TRAINED MODEL

↓

TYPE OF MISCLASSIFICATION

↓ S3

EXTRACT MISCLASSIFICATION DATA

↓ S4

IDENTIFY PARAMETER

↓ S5

CORRECT PARAMETER

↓

TYPE OF MISCLASSIFICATION

↓ S6

INTEGRATE CORRECTION PARAMETERS

↓ S7

GENERATE INTEGRATED MODEL

↓

END GENERATION PROCESS

# FIG.5

START CLASSIFICATION PROCESS

S11

ACQUIRE TARGET DATA

S12

CLASSIFY TARGET DATA

END CLASSIFICATION PROCESS

# FIG.6A

| VGG16 | REM | | |
|---|---|---|---|
| Approach | min | max | avg |
| $RETR_{NW}^{rep}$ | −1.90 | −0.04 | −0.31 |
| $RETR_{W}^{rep}$ | −0.82 | 0.28 | −0.22 |
| $RETR_{NW}^{rep+tr}$ | −0.18 | 0.36 | 0.10 |
| $RETR_{W}^{rep+tr}$ | −1.57 | −0.23 | −0.94 |
| ARACHNE | −3.94 | −1.07 | −2.23 |
| $ARACHNE_{REM}$ | −7.96 | −0.24 | −5.24 |
| DISTRREP | **4.22** | **5.94** | **5.28** |

# FIG.6B

| ENetB7 | REM | | |
|---|---|---|---|
| Approach | min | max | avg |
| $RETR_{NW}^{rep}$ | −1.09 | 1.20 | 0.33 |
| $RETR_{W}^{rep}$ | −1.14 | 1.36 | 0.17 |
| $RETR_{NW}^{rep+tr}$ | 0.28 | 1.37 | 0.87 |
| $RETR_{W}^{rep+tr}$ | −1.51 | 0.63 | −0.18 |
| ARACHNE | −2.57 | 1.03 | −1.09 |
| $ARACHNE_{REM}$ | 0.38 | 2.94 | 1.44 |
| DISTRREP | **6.79** | **8.42** | **7.57** |

FIG.7

# FIG.8

# FIG.9

START GENERATION PROCESS

S31

TRAIN CLASSIFICATION MODEL

S32

CLASSIFY BY TRAINED MODEL

S33

EXTRACT MISCLASSIFICATION DATA

S34

IDENTIFY PARAMETER

S35

CORRECT PARAMETER

S36

INTEGRATE CORRECTION PARAMETERS

S37

GENERATE INTEGRATED MODEL

END GENERATION PROCESS

## INTERNATIONAL SEARCH REPORT

| International application No. |
|---|
| **PCT/JP2024/003019** |

| | |
|---|---|
| **A.** | **CLASSIFICATION OF SUBJECT MATTER** |
| | *G06N 3/0985*(2023.01)i; *G06N 3/086*(2023.01)i |
| | FI: G06N3/0985; G06N3/086 |

According to International Patent Classification (IPC) or to both national classification and IPC

| | |
|---|---|
| **B.** | **FIELDS SEARCHED** |

Minimum documentation searched (classification system followed by classification symbols)

G06N3/0985; G06N3/086

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | TOKUI, Shogo et al. NEURECOVER: Regression-Controlled Repair of Deep Neural Networks with Training History. arXiv [online]. 04 March 2022, [retrieved on 29 March 2024], Internet:<URL: https://arxiv.org/abs/2203.00191 > | 1-7 |
| A | 徳井 翔梧 ほか, 分類モデルの出力値間の距離に基づいた退行抑制のためのディープニューラルネットワーク修正技術の検討, 情報処理学会研究報告, 12 March 2022, vol. 2022-SE-210, no. 31, pp. 1-8, (TOKUI, Shogo et al. IPSJ SIG technical reports.), non-official translation (Study on correction techniques of deep neural network for suppression of regression based on distance between output values of classification model) | 1-7 |
| A | WO 2022/130762 A1 (AGC INC.) 23 June 2022 (2022-06-23) | 1-7 |

☐ Further documents are listed in the continuation of Box C.  ☑ See patent family annex.

| | |
|---|---|
| \* | Special categories of cited documents: |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 March 2024** | **09 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/003019**

| Patent document cited in search report | Publication date (day/month/year) | Patent family member(s) | Publication date (day/month/year) |
|---|---|---|---|
| WO 2022/130762 A1 | 23 June 2022 | CN 116368375 A | |
| | | KR 10-2023-0119625 A | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023014970 A

**Non-patent literature cited in the description**

- **J. SOHN ; S. KANG ; S. YOO**. Search based repair of deep neural networks. *CoRR, abs/1912.12463*, 2019